# EUROPEAN PATENT SPECIFICATION

(11) **EP 2 587 935 B1**
(45) Date of publication and mention of the grant of the patent: **06.04.2016**
(21) Application number: 11801228.5
(22) Date of filing: 23.06.2011
(51) Int. Cl.: A23K 10/30, A23K 20/00, A23K 20/20, A23K 50/00

(54) **MYCOTOXIN BINDING COMPOSITIONS**
MYKOTOXIN-BINDENDE ZUSAMMENSETZUNGEN
COMPOSITIONS DE LIAISON À BASE DE MYCOTOXINE

(30) Priority: 01.07.2010 SE 1000707
(43) Date of publication of application: 08.05.2013
(73) Proprietor: PERSTORP AB, 284 80 Perstorp (SE)
(72) Inventor: KINJET, Marc, NL-7312 MA Apeldoorn (NL); FRIJTERS, Karin, NL-5035 HS Tilburg (NL)
(74) Representative: Hoffmann Eitle
(86) International application number: PCT/SE2011/000122
(87) International publication number: WO 2012/002871

(56) References cited:
- WO-A2-2008/021752
- DE-A1- 3 152 120
- US-A1- 2008 248 155
- KOGAN ET AL: "Role of yeast cell wall polysaccharides in pig nutrition and health protection", LIVESTOCK SCIENCE, ELSEVIER, AMSTERDAM, NL, vol. 109, no. 1-3, 29 April 2007 (2007-04-29), pages 161-165, XP022053296, ISSN: 1871-1413, DOI: 10.1016/J.LIVSCI.2007.01.134
- A. H. M. EL-SAID: "Mycotoxins and Invertase Enzyme of the Mycoflora of Molasses in Upper Egypt", PAKISTAN JOURNAL OF BIOLOGICAL SCIENCES, [Online] vol. 4, no. 11, 1 January 2001 (2001-01-01), pages 1386-1389, XP002718829, INET: Asian Network for Scientific Information ISSN: 1812-5735, DOI: 10.3923/pjbs.2001.1386.1389

## Description

The present application refers to a composition for binding and thereby inactivating mycotoxin in an animal feed. The composition comprises carob, a silicate mineral and an immune stimulant, wherein said immune stimulant are glucans of vegetable origin. The present application also refers to an animal feed additive, an animal feed and a method for counteracting mycotoxin in an animal feed.

Mycotoxins are highly toxic secondary products of the metabolism of some fungi mainly belonging to *Aspergillus, Penicillium and Fusarium* spp. It has been estimated that at least 300 fungal metabolites are potentially toxic for humans and animals, and it can be realistically assumed that other mycotoxins are likely to be discovered.

Every year a substantial percentage of the world's grain and hay supply for animal feed is contaminated by these toxins. Mycotoxins affect feed nutritive value, livestock performance and animal health. Mycotoxin contaminated feeds may exacerbate health problems and associated poor performance due to toxicity.

Mycotoxins can be carcinogenic, hepatotoxic, immunosuppressive etc. The physical effects of mycotoxins range from reduced feed intake and poor feed conversion to a general inability of the animal to maintain its health status and can even lead to death. Symptoms vary according to the toxin involved.

Aflatoxins, the most common mycotoxin, cause increased susceptibility to disease. At the organ or cellular level mycotoxins differ in their effects with severe damage done to the liver and kidney by aflatoxins and on reproductive organs by zearalenone. Other indices of mycotoxicosis include mammary gland swelling and ovarian aftrophy (zearalenone), oral lesions in chicks (T2 toxins), nervous system disorders and necrosis of the extremities (ergot alkaloids). Mycotoxins may also impact human health, as many are transferred into milk or meat following ingestion by the animal.

Effective tools for dealing with mycotoxins include the use of mold inhibitors to prevent mold growth in stored feeds and Good Agricultural Practices pre-harvest and during harvest.

However, particularly in the livestock industries, economic circumstances force producers to find ways to ensure the prevention of the damaging effects of mycotoxins on animal health and production.

Common methods have included dilution of contaminated feeds with feedstuffs known to be free of mycotoxins (this method is not allowed in parts of the world anymore); physical separation to remove highly contaminated feeds, and ammoniation or heating to detoxify the feeds. These methods are labor-intensive and uneconomical, and may be ineffective against certain mycotoxins.

A more viable method of dealing with mycotoxins is to blend in substances capable of binding toxins, thus preventing absorption of the toxins into the animal's bloodstream. The use of mineral clays as binders has proven successful enough to use commercially. US Patent No. 5,149,549 teaches the use of montmorillonite clay, particularly a bentonite clay, admixed with animal feeds as a mycotoxin binder. U.S. Patent No. 5,165,946 teaches the use of montmorillonite clay in combination with a suitable sequestrant, particularly phosphate and polyphosphate salts, as a mycotoxin binder. However, most clays have a limited binding efficacy range, binding only aflatoxins to any significant extent. European Patent No. 1 079 696 teaches a composition for adsorption of a variety of mycotoxins, comprising a modified yeast cell wall extract and a clay. Although this composition does bind a variety of mycotoxins, only the binding level of aflatoxins is really high enough to be satisfactory. Thus, there is a need for a composition binding more efficiently a broader range of mycotoxins.

DE 31 52 120 A1 discloses a feed or feed additive composition comprising the silicate component petite or zeolite and carob for use in binding or inactivating mycotoxins derived from further ingredients of the composition. In contrast to the present invention, the composition according to DE 31. 52 120 A1 does not contain an immune stimulant.

The present invention refers to a composition for binding and thereby inactivating mycotoxin in an animal feed. The invention is based on the finding that a composition comprising carob and also a silicate mineral and an immune stimulant, wherein said immune stimulant are glucanes of vegetable origan, has surprisingly proven to be very efficient in binding at least three mycotoxins often found in animal feeds.

The composition according to the present invention comprises 10 to 30 % by weight of carob, 40 to 80 % by weight of a silicate mineral and 1 to 25 % by weight of an immune stimulant, wherein said immune stimulant are glucanes of vegetable origin. According to a preferred embodiment of the present invention, the composition comprises from 1 to 20 % by weight of said immune stimulant.

Silicate minerals are known to be effective binders mainly of aflatoxins, but they fail to efficiently bind a broader range of mycotoxins, including for example zearalenone and T2 toxin. The toxin-binding composition according to the present invention shows a remarkable increase in binding levels of zearalenone and T2 toxin compared to compositions comprising only a silicate mineral or a silicate mineral in combination with a yeast cell wall extract.

The silicate material of the composition according to the present invention is preferably selected from the group consisting of a zeolite, bentonite, an aluminosilicate or a mixture thereof and is most preferably bentonite.

Glucans of vegetable origin are known to work as immune stimulants in animals and thereby to counteract the depleting effects of many toxins.

According to yet another embodiment of the present invention the composition preferably comprises 55-65 parts per weight bentonite, 15 to 25 parts per weight carob and 5 to 15 parts per weight of glucans of vegetable origin. The composition more preferably comprises 60 ±2 parts per weight bentonite, 20 ±2 parts per weight carob and 10 ±1 parts per weight of glucans of vegetable origin.

In a preferred embodiment of the present invention, the source of glucans of vegetable origin are preferably obtained from a soy hull, oat hull and/or barley hull source.

In another preferred embodiment of the present invention, the composition comprises 60 ± 2 parts per weight bentonite, 20 ±2 parts per weight carob and 20 ±2 parts per weight soy hull.

The present invention also refers to the use of the composition according to the present invention as animal feed additive.

The present invention also refers to a method for counteracting mycotoxin in an animal feed and thereby improving nutritional quality of said animal feed, the animal feed comprising an effective amount of the composition according to the invention. According to one embodiment the effective amount is preferably from 0.01 to 4 % by weight of an animal's daily feed ration.

The present invention thereby refers to an animal feed comprising from 0.01 to 4 % by weight of said feed additive. The man skilled in the art can appreciate that the amount of the composition fed can vary depending upon the animal species, size of the animal and type of feedstuff to which the composition is to be added.

The composition provided by the present invention can be added to any commercially available feedstuffs for livestock and companion animals. The compositions provided by the present invention may be incorporated directly into commercially available feeds or fed supplementary to commercially available feeds.

The following embodiment example demonstrates the *in vitro* mycotoxin-binding capacity of the composition provided by the present invention. The same kind of experiment was also performed for two other well known compositions used for binding toxins, to compare the toxin-binding capacities of the compositions. The embodiment example is to be constructed as illustrative and not limiting in any way.

The three different toxin-binding compositions tested were:

| | |
|---|---|
| 60 % bentonite + 20 % carob + 20 % soy hull | (according to the invention) |
| | |
| 100 % bentonite | (comparative) |
| | |
| 80 % bentonite + 20 % yeast cell wall extract | (comparative) |

The experiments were done in a 5 % organic solution. A standard mycotoxin solution was prepared of 200 µg Aflatoxin Bl, 1600 µg Zearalenone, and 1600 flg T2 toxin with 10 ml acetonitrile. 1 ml of the standard mycotoxin solution was taken and 1 ml methanol and 38 ml phosphate buffered saline was added.

The toxin-binding compositions were added at a concentration of 0.25 % by weight. The three different mixtures of toxins and toxin-binder were shaken for 6 hours at 37 °C and 150 rpm. After the incubation time the samples were left quiet, allowing the components of the toxin-binding compositions to settle. The remaining sample fluids were diluted 1000 times with an eluent composed of 80 % water and 20 % acetonitrile and filtered through a 0.2 µm filter. The toxin levels were then detected by standard LC-MS/MS procedures. The results of the three experiments are shown in Table 1.

It can be seen in Table 1 that Aflatoxin is very well bound by all three compositions. The most remarkable difference is noted in the binding of Zearalenone, where the composition according to the invention binds almost all the toxin (99 %) whereas the two comparative compositions bind 46 % (bentonite + yeast cell wall extract) and only 7 % (bentonite) respectively. Also the binding of T2 toxin is much more efficient in the composition according to the invention compared to in the two comparative compositions (76 % compared to 26 % and 29 % respectively).

These results show that the composition according to the invention has proven to be very efficient in binding and thereby inactivating at least three mycotoxins often found in animal feeds.

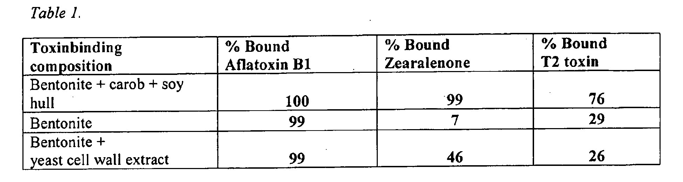

## Claims

1. A composition for binding and thereby inactivating mycotoxin, **characterised in that** said composition comprises from 10 to 30 % by weight of carob, 40 to 80 % by weight of a silicate mineral and 1 to 25 % by weight of an immune stimulant, wherein said immune stimulant are glucans of vegetable origin.

2. A composition according to claim 1, **characterised in that** said silicate mineral is selected from the group consisting of a zeolite, bentonite, an aluminosilicate or a mixture thereof.

3. A composition according to claim 1 or 2, **characterised in that** said composition comprises 55-65 parts per weight bentonite, 15 to 25 parts per weight carob and 5 to 15 parts per weight glucans of vegetable origin.

4. A composition according to any of the claims 1-3, characteris.ed in that said composition comprises 60±2 parts per weight bentonite, 20±2 parts per weight carob and 10±1 parts per weight glucans of vegetable origin.

5. A composition according to any of the claims 1-4, **characterised in that** said glucans of vegetable origin are obtained from a soy hull, oat hull and/or barley hull source.

6. A composition according to any of the claims 1-5, **characterised in that** said composition comprises 60±2 parts per weight bentonite, 20±2 parts per weight carob and 20±2 parts per weight soy hull.

7. Use of a composition according to any of the claims 1-6, as an animal feed additive.

8. A method for counteracting mycotoxin in an animal feed and thereby improving nutritional quality of said animal feed, **characterised in that** said animal feed comprises an effective amount of a composition according to any of the claims 1-6.

9. A method according to claim 8, **characterised in that** said effective amount of the composition is from 0.01 to 4 % by weight of an animal's daily feed ration.

## Patentansprüche

1. Zusammensetzung zur Bindung und dadurch Inaktivierung von Mykotoxin, **dadurch gekennzeichnet, dass** die Zusammensetzung 10 bis 30 Gew.% Johannisbrot, 40 bis 80 Gew.% eines Silikatminerals und 1 bis 25 Gew.% eines Immunstimulans umfasst, wobei das Immunstimulans Glucane pflanzlichen Ursprungs sind.

2. Zusammensetzung gemäß Anspruch 1, **dadurch gekennzeichnet, dass** das Silikatmineral aus der Gruppe ausgewählt ist, die aus einem Zeolith, Bentonit, einem Aluminosilikat oder einer Mischung davon besteht.

3. Zusammensetzung gemäß Anspruch 1 oder 2, **dadurch gekennzeichnet, dass** die Zusammensetzung 55 bis 65 Gew.-Teile Bentonit, 10 bis 25 Gew.-Teile Johannisbrot und 5 bis 15 Gew.-Teile Glucane pflanzlichen Ursprungs umfasst.

4. Zusammensetzung gemäß einem der Ansprüche 1 bis 3, **dadurch gekennzeichnet, dass** die Zusammensetzung 60 ± 2 Gew.-Teile Bentonit, 20 ± 2 Gew.-Teile Johannisbrot und 10 ± 1 Gew.-Teile Glucane pflanzlichen Ursprungs umfasst.

5. Zusammensetzung gemäß einem der Ansprüche 1 bis 4, **dadurch gekennzeichnet, dass** die Glucane pflanzlichen Ursprungs aus einer Sojaschalen-, Haferspelzen- und/oder Gerstenspelzenquelle erhalten wurden.

6. Zusammensetzung gemäß einem der Ansprüche 1 bis 5, **dadurch gekennzeichnet, dass** die Zusammensetzung 60 ± 2 Gew.-Teile Bentonit, 20 ± 2 Gew.-Teile Johannisbrot und 20 ± 2 Gew.-Teile Sojaschalen umfasst.

7. Verwendung einer Zusammensetzung gemäß einem der Ansprüche 1 bis 6 als Tierfuttermittelzusatz.

8. Verfahren zur Bekämpfung von Mykotoxin in einem Tierfuttermittel und dadurch Verbesserung des Nährwerts des Tierfuttermittels, **dadurch gekennzeichnet, dass** das Tierfuttermittel eine wirksame Menge einer Zusammensetzung gemäß einem der Ansprüche 1 bis 6 umfasst.

9. Verfahren gemäß Anspruch 8, **dadurch gekennzeichnet, dass** die wirksame Menge der Zusammensetzung 0,01 bis 4 Gew.% der täglichen Futtermittelration eines Tiers beträgt.

## Revendications

1. Composition pour la liaison et donc l'inactivation de la mycotoxine, **caractérisée en ce que** ladite composition comprend 10 % à 30 % en poids de caroube, 40 % à 80 % en poids d'un minéral silicaté et 1 % à 25 % en poids d'un stimulant immunitaire, dans laquelle ledit stimulant immunitaire est formé de glucanes d'origine végétale.

2. Composition selon la revendication 1, **caractérisée en ce que** ledit minéral silicaté est choisi dans le groupe constitué par une zéolithe, une bentonite, un aluminosilicate ou un mélange de ceux-ci.

3. Composition selon la revendication 1 ou 2, **caractérisée en ce que** ladite composition comprend 55 à 65 parties en poids de bentonite, 15 à 25 parties en poids de caroube et 5 à 15 parties en poids de glucanes d'origine végétale.

4. Composition selon l'une quelconque des revendications 1 à 3, **caractérisée en ce que** ladite composition comprend 60 ± 2 parties en poids de bentonite, 20 ± 2 parties en poids de caroube et 10 ± 1 parties en poids de glucanes d'origine végétale.

5. Composition selon l'une quelconque des revendications 1 à 4, **caractérisée en ce que** lesdits glucanes d'origine végétale sont obtenus à partir d'une source de cosses de soja, de cosses d'avoine et/ou de cosses d'orge.

6. Composition selon l'une quelconque des revendications 1 à 5, **caractérisée en ce que** ladite composition comprend 60 ± 2 parties en poids de bentonite, 20 ± 2 parties en poids de caroube et 20 ± 2 parties en poids de cosses de soja.

7. Utilisation d'une composition selon l'une quelconque des revendications 1 à 6, comme additif d'alimentation animale.

8. Procédé de neutralisation de la mycotoxine dans une alimentation animale et donc d'amélioration de la qualité nutritionnelle de ladite alimentation animale, **caractérisé en ce que** ladite alimentation animale comprend une quantité efficace d'une composition selon l'une quelconque des revendications 1 à 6.

9. Procédé selon la revendication 8, **caractérisé en ce que** ladite quantité efficace de la composition est de 0,01 % à 4 % en poids de la ration alimentaire quotidienne d'un animal.
